# EUROPEAN PATENT APPLICATION

(11) **EP 4 693 337 A1**
(43) Date of publication of application: **11.02.2026**
(21) Application number: 23930379.5
(22) Date of filing: 28.03.2023
(51) Int. Cl.: H01B 1/06

(54) **SOLID ELECTROLYTE AND LITHIUM ION BATTERY**

(71) Applicant: NGK Insulators, Ltd., Nagoya-shi, Aichi 467-8530 (JP)
(72) Inventor: SUTO, Yusaku, Nagoya-shi, Aichi 467-8530 (JP); NISHIZAKI, Tsutomu, Nagoya-shi, Aichi 467-8530 (JP); YOSHIDA, Toshihiro, Nagoya-shi, Aichi 467-8530 (JP)
(74) Representative: Mewburn Ellis LLP
(86) International application number: PCT/JP2023/012623
(87) International publication number: WO 2024/201739

(57) **Abstract**

A solid electrolyte contains Li, Mα, Mβ, Mγ, Cl, and O. Mα is at least one element selected from the group consisting of Zr and Hf, Mβ is at least one element selected from the group consisting of Ta and Nb, and Mγ is at least one element selected from the group consisting of Gd, Yb, Dy, Er, Ho, Eu, and Sc. This provides the solid electrolyte with high ionic conductivity and high stability.

## Description

### TECHNICAL FIELD

The present invention relates to a solid electrolyte and a lithium-ion battery.

### BACKGROUND ART

In recent years, there is a strong demand for downsizing and improved reliability (safety) of batteries serving as power sources for electronic equipment. Thus, attention has been placed on all-solid-state batteries using solid electrolytes. Halides are known as solid electrolytes that contain no sulfur, and Li₃YCl₆ exhibits high Li ionic conductivity at ambient temperature (see, for example, Japanese Patent No. 6934626 (Document 1)). International Publication No. 2020/070956 (Document 2) discloses a solid-state halide electrolyte material expressed by Li_{6-4b+ab}(Zr₁₋ₐMₐ)_{b}X₆. Here, M is at least one type of element selected from the group consisting of Al, Ga, Bi, Sc, Sm, and Sb, X is a halogen element, and 0 < a < 1 and 0 < b < 1.5 are satisfied. International Publication No. 2021/250985 (Document 3) discloses a solid-state electrolyte material that contains Li, M, O, and X. Here, M is at least one selected from the group consisting of Ti, Zr, and Hf, and X is at least one selected from the group consisting of Cl, Br, and I.

As described previously, chloride electrolytes such as Li₃YCl₆ exhibit high ionic conductivity at ambient temperature, but there is no information disclosed about stability. The inventors of the present application have prepared the solid electrolytes disclosed in Documents 1 to 3 described above and left these solid electrolytes at rest in a dry room with a dew point controlled at -40°C. As a result, they have found that the electrolytes were decomposed and could not maintain their initial ionic conductivity, i.e., had low stability (or resistance to humidity). In view of this, in order to improve the stability of chloride electrolytes, the inventors of the present application have prepared materials by combining various cations (M) in LiₓMCl₆ and searched for a combination of cations that achieves high stability. As a result, a combination of cations that exhibit high initial conductivity and high stability has been identified, which will be described later as related technology. The solid electrolyte according to the related technology, however, fails to constantly achieve sufficient ionic conductivity and stability.

### SUMMARY OF THE INVENTION

The present invention is intended for a solid electrolyte, and it is an object of the present invention to provide a solid electrolyte with high ionic conductivity and high stability.

Aspect 1 of the present invention is a solid electrolyte that contains Li, Mα, Mβ, Mγ, Cl, and O. Mα is at least one element selected from a group consisting of Zr and Hf, Mβ is at least one element selected from a group consisting of Ta and Nb, and Mγ is at least one element selected from a group consisting of Gd, Yb, Dy, Er, Ho, Eu, and Sc.

According to the present invention, it is possible to provide the solid electrolyte with high ionic conductivity and high stability.

Aspect 2 of the present invention is the solid electrolyte according to Aspect 1, in which Mα includes Zr.

Aspect 3 of the present invention is the solid electrolyte according to Aspect 1 or 2, in which Mβ includes Ta.

Aspect 4 of the present invention is the solid electrolyte according to any one of Aspects 1 to 3, in which Mγ includes Gd, Yb, or Er.

Aspect 5 of the present invention is the solid electrolyte according to any one of Aspects 1 to 4, in which the solid electrolyte is expressed by a composition formula (1) below:

Li_{6-(4+a-b)(1+c)}(Mα_{(1-a-b)}MβₐMγ_{b})_{1+c}Cl_{6-2d}O_{d} ... (1),

where 0 < a, 0 < b, a + b < 1, -0.2 ≤ c ≤ 0.2, and 0 < d < 3 are satisfied.

Aspect 6 of the present invention is a lithium-ion battery that includes the solid electrolyte according to any one of Aspects 1 to 5.

These and other objects, features, aspects and advantages of the present invention will become more apparent from the following detailed description of the present invention when taken in conjunction with the accompanying drawings.

### BRIEF DESCRIPTION OF DRAWINGS

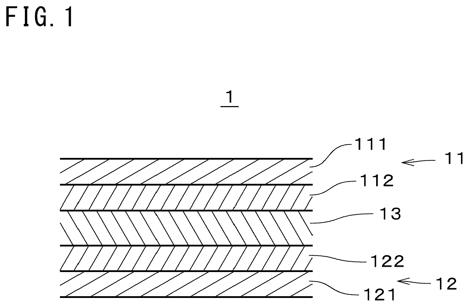

Fig. 1 is a longitudinal sectional view of an all-solid-state lithium-ion secondary battery.

### DESCRIPTION OF EMBODIMENTS

First, a solid electrolyte according to related technology of the present invention will be described. The solid electrolyte according to the related technology is a lithium (Li)-ion conductive material and contains a lithium (Li) element, other three types of metallic (Mα, Mβ, My) elements serving as cations, and a chlorine (Cl) element.

Mα is an element serving as a tetravalent cation and is at least one element selected from the group consisting of zirconium (Zr) and hafnium (Hf). Mβ is an element serving as a pentavalent cation and is at least one element selected from the group consisting of tantalum (Ta) and niobium (Nb). Mγ is an element serving as a trivalent cation and is at least one element selected from the group consisting of gadolinium (Gd), ytterbium (Yb), dysprosium (Dy), erbium (Er), holmium (Ho), europium (Eu), and scandium (Sc). The solid electrolyte that contains at least one type of trivalent element, at least one type of quadrivalent element, and at least one type of pentavalent element as cations, in addition to Li, achieves high initial conductivity and high stability.

One preferable example of the solid electrolyte according to the related technology is a compound expressed by the following composition formula:

Li_{6-(4+a-b)(1+c)}(Mα_{(1-a-b)}MβₐMγ_{b})_{1+c}Cl₆,

where 0 < a, 0 < b, a + b < 1, and -0.2 ≤ c ≤ 0.2 are satisfied.

Next, a solid electrolyte according to one embodiment of the present invention will be described. The solid electrolyte is a Li-ion conductive material obtained by adding oxygen (O) to the solid electrolyte according to the related technology described above. For example, the solid electrolyte may be used in the production of an all-solid-state secondary battery. The solid electrolyte contains a Li element, other three types of metallic (Mα, Mβ, My) elements serving as cations, a Cl element, and an O element. The solid electrolyte may contain only Li, Mα, Mβ, Mγ, Cl, and O.

As in the solid electrolyte according to the related technology described above, Mα is an element serving as a tetravalent cation and is at least one element selected from the group consisting of Zr and Hf. Mβ is an element serving as a pentavalent cation and is at least one element selected from the group consisting of Ta and Nb. Mγ is an element serving as a trivalent cation and is at least one element selected from the group consisting of Gd, Yb, Dy, Er, Ho, Eu, and Sc. As will be described later, the solid electrolyte that contains at least one type of trivalent element, at least one type of quadrivalent element, and at least one type of pentavalent element as cations, in addition to Li, and that further contains Cl and O achieves higher ionic conductivity and stability than the solid electrolyte according to the related technology. Besides, since the solid electrolyte generates no hydrogen sulfide gases, it is possible to provide an all-solid-state secondary battery with high safety.

In order for the solid electrolyte according to the present embodiment to more reliably achieve high ionic conductivity and high stability, Mα preferably includes Zr and may include only Zr, Mβ preferably includes Ta and may include only Ta, and Mγ preferably includes Gd, Yb, or Er and may include only Gd, Yb, or Er. Mγ may include two or more elements selected from among Gd, Yb, and Er. For example, the amount of substance of Li is greater than the amount of substance of any of Mα, Mβ, and Mγ and preferably greater than a total of the amounts of substance of M α, Mβ, and Mγ. The amount of substance of Cl is, for example, greater than a total of the amounts of substance of Li, Mα, Mβ, and Mγ. The amount of substance of O is, for example, less than one half the amount of substance of Cl and preferably less than one fourth the amount of substance of Cl.

The solid electrolyte is preferably a compound expressed by the following composition formula (1):

Li_{6-(4+a-b)(1+c)}(Ma_{(1-a-b)}MβₐMγ_{b})_{1+c}Cl_{6-2d}O_{d} ... (1),

where 0 < a, 0 < b, a + b < 1, -0.2 ≤ c ≤ 0.2, and 0 < d < 3 are satisfied. Here, a and b may satisfy 0.1 ≤ a ≤ 0.5 and 0.1 ≤ b ≤ 0.4 and may also satisfy 0.2 ≤ a + b ≤ 0.8. By way of example, the relationship between a and b is expressed as a ≥ b, but it may also be expressed as a < b. Here, c may satisfy -0.1 ≤ c ≤ 0.1 or may be zero, and d may satisfy 0 < d < 1. Preferably, d satisfies 0 < d < 0.5 and more preferably satisfies 0 < d ≤ 0.4. A lower limit for d may be 0.1. The solid electrolyte may be either crystalline or amorphous.

In the case of checking whether an unknown solid electrolyte is the solid electrolyte according to the present embodiment, chemical analysis is conducted on the unknown solid electrolyte to check whether Li, Mα, Mβ, Mγ, Cl, and O are constituent elements of the unknown solid electrolyte. To check whether the unknown solid electrolyte is expressed by the composition formula (1) given above, for example, Li, Mα, Mβ, and Mγ can be quantitated by an ICP emission spectral analysis method or the like. For example, Cl can be quantitated by ion chromatography or the like. For example, O can be quantitated by ONH analysis using an oxygen/nitrogen/hydrogen analyzer or the like.

The molar ratio of Li, Mα, Mβ, Mγ, Cl, and O in the composition formula (1) given above becomes as follows: Li:Mα:Mβ:Mγ:Cl:O = 6-(4+a-b)(1+c):(1-a-b)(1+c):a(1+c):b(1+c):6-2d:d. If the value of Li in the molar ratio obtained by the analysis conducted on the unknown solid electrolyte is greater than or equal to 0.90×{6-(4+a-b)(1+c)} and less than or equal to 1.10×{6-(4+a-b)(1+c)}, Li is considered to satisfy the above composition formula (1). More preferably, the value of Li is greater than or equal to 0.95×{6-(4+a-b)(1+c)} and less than or equal to 1.05×{6-(4+a-b)(1+c)}. The same also applies to Mα, Mβ, Mγ, Cl, and O.

The solid electrolyte according to the present embodiment is produced by, for example, the following method. Firstly, powder of a compound that contains Li, powder of a compound that contains Mα, powder of a compound that contains Mβ, and powder of a compound that contains Mγ are prepared. Some of the compounds are chlorides, and the remaining compounds are oxides. Alternatively, oxides and chlorides that contain the same metallic elements may be prepared. For example, a chloride containing Li is LiCl, and an oxide containing Li is Li₂O. For example, a chloride containing Mα is MαCl₄, and an oxide containing Mα is MαO₂. For example, a chloride containing Mβ is MβCl₅, and an oxide containing Mβ is Mβ₂O₅. For example, a chloride containing Mγ is MγCl₃, and an oxide containing Mγ is Mγ₂O₃. The powder of these compounds is weighted and mixed together in a predetermined molar ratio.

Then, a resultant mixture is subjected to a milling process (mechanochemical milling). In one example of the milling process, a planetary ball mill is used. In the planetary ball mill, a stage with a pot placed thereon revolves while the pot rotates on its axis, so that remarkably high impact energy can be generated. The milling process may also be performed by using any other type of pulverizer. Through the aforementioned milling process, the solid electrolyte according to the present embodiment is obtained. The solid electrolyte is used in the production of a positive electrode layer 112, a negative electrode layer 122, or an electrolyte layer 13 of the all-solid-state secondary battery 1 (see Fig. 1), which will be described later. In the present processing example, the milling process is conducted at ordinary temperatures, but conditions such as temperature may be changed as appropriate. Alternatively, the solid electrolyte according to the present embodiment may also be produced by any other processing such as firing other than the milling process.

Fig. 1 is a longitudinal sectional view of the all-solid-state lithium-ion secondary battery 1 (hereinafter, simply referred to as the "all-solid-state secondary battery 1"). The all-solid-state secondary battery 1 uses the solid electrolyte according to the present embodiment. The all-solid-state secondary battery 1 includes the positive electrode 11, the electrolyte layer 13, and the negative electrode 12 in order from the top of Fig. 1. That is, the electrolyte layer 13 is provided between the positive electrode 11 and the negative electrode 12. The electrolyte layer 13 is a solid-state electrolyte layer and serves also as a separator layer. The electrolyte layer 13 is formed of or contains the solid electrolyte according to the present embodiment. The positive electrode 11 includes a current collector 111 and a positive electrode layer 112. The positive electrode layer 112 contains a positive active material. The negative electrode 12 includes a current collector 121 and a negative electrode layer 122. The negative electrode layer 122 contains a negative active material.

Preferably, the positive active material of the positive electrode layer 112 contains a lithium complex oxide. A preferable positive active material is a lithium complex oxide having a layered rock-salt structure and may, for example, be NCM (Li(Ni, Co, Mn)O₂). The positive active material may also be any other lithium complex oxide, and examples of the positive active material include NCA (Li(Ni, Co, Al)O₂) or LCO (LiCoO₂) having a layered rock-salt structure, LNMO (LiNi_{0.5}Mn_{1.5}O₄) having a spinel structure, and LFP (LiFePO₄) having an olivine structure. In addition to the positive active material, the positive electrode layer 112 further contains the solid electrolyte according to the present embodiment. The positive electrode layer 112 may further contain an electron conductive agent (e.g., carbon black). By way of example, the positive electrode layer 112 may be obtained by integrating those substances together by applying pressure or heat.

Examples of the negative active material of the negative electrode layer 122 include compounds such as LTO (Li₄Ti₅O₁₂), NTO (Nb₂TiO₇), TiO₂ (titanium oxide), graphite, and SiO (silicon monoxide). In addition to the negative active material, the negative electrode layer 122 further contains the solid electrolyte according to the present embodiment. The negative electrode layer 122 may further contain an electron conductive agent (e.g., carbon black). By way of example, the negative electrode layer 122 may be obtained by integrating those substances together by applying pressure or heat. The configurations and materials of the positive electrode 11 and the negative electrode 12 in the all-solid-state secondary battery 1 are not limited to the examples described above, and various other configurations and materials are adoptable.

Next, examples of the solid electrolyte and comparative examples therefor will be described. Tables 1 to 5 show the compositions of solid electrolytes according to Examples 1 to 8 and Comparative Examples 1 to 6 and the results of evaluation therefor. The solid electrolytes according to Comparative Examples 1 and 3 to 6 are the solid electrolyte according to the related technology described above.

**Table 1**

| | Solid Electrolyte | Ionic Conductivity [S/cm] | | Retention Rate [%] |
|---|---|---|---|---|
| | | After Synthesis | 16h Exposure | (16h Exposure) /(After Synthesis) |
| Example 1 | Li_{1.7}Zr_{0.5}Ta_{0.4}Gd_{0.1}Cl_{5.7}O_{0.15} | 1.2 × 10⁻³ | 6.1 × 10⁻⁴ | 52 |
| Example 2 | Li_{1.7}Zr_{0.5}Ta_{0.4}Gd_{0.1}Cl_{5.4}O_{0.3} | 1.4 × 10⁻³ | 5.0 × 10⁻⁴ | 35 |
| Example 3 | Li_{1.7}Zr_{0.5}Ta_{0.4}Gd_{0.1}Cl₅O_{0.5} | 1.5 × 10⁻³ | 2.7 × 10⁻⁴ | 18 |
| Example 4 | Li_{1.7}Zr_{0.5}Ta_{0.4}Gd_{0.1}Cl_{4.5}O_{0.75} | 9.3 × 10⁻⁴ | 2.8 × 10⁻⁴ | 30 |
| Comparative Example 1 | Li_{1.7}Zr_{0.5}Ta_{0.4}Gd_{0.1}Cl₆ | 5.4 × 10⁻⁴ | 5.6 × 10⁻⁵ | 11 |
| Comparative Example 2 | Li₂Zr_{0.7}Ti_{0.3}Cl_{4.8}O_{0.6} | 3.9 × 10⁻⁴ | 3.5 × 10⁻⁵ | 9 |

**Table 2**

| | Solid Electrolyte | Ionic Conductivity [S/cm] | | Retention Rate [%] |
|---|---|---|---|---|
| | | After Synthesis | 16h Exposure | (16h Exposure) /(After Synthesis) |
| Example 5 | Li_{2.0}Zr_{0.6}Ta_{0.2}Gd_{0.2}Cl_{5.7}O_{0.15} | 9.4 × 10⁻⁴ | 5.2 × 10⁻⁴ | 55 |
| Comparative Example 3 | Li_{2.0}Zr_{0.6}Ta_{0.2}Gd_{0.2}Cl₆ | 9.2 × 10⁻⁴ | 2.2 × 10⁻⁴ | 24 |

**Table 3**

| | Solid Electrolyte | Ionic Conductivity [S/cm] | | Retention Rate [%] |
|---|---|---|---|---|
| | | After Synthesis | 16h Exposure | (16h Exposure) /(After Synthesis) |
| Example 6 | Li_{1.9}Zr_{0.5}Ta_{0.3}Gd_{0.2}Cl_{5.4}O_{0.3} | 1.5 × 10⁻³ | 3.2 × 10⁻⁴ | 21 |
| Comparative Example 4 | Li_{1.9}Zr_{0.5}Ta₀.₃Gd_{0.2}Cl₆ | 4.8 × 10⁻⁴ | 8.6 × 10⁻⁵ | 18 |

**Table 4**

| | Solid Electrolyte | Ionic Conductivity [S/cm] | | Retention Rate [%] |
|---|---|---|---|---|
| | | After Synthesis | 16h Exposure | (16h Exposure) /(After Synthesis) |
| Example 7 | Li_{2.0}Zr_{0.6}Ta_{0.2}Yb_{0.2}Cl_{5.7}O_{0.15} | 1.5 × 10⁻³ | 2.8 × 10⁻⁴ | 19 |
| Comparative Example 5 | Li_{2.0}Zr_{0.6}Ta₀.₂Yb_{0.2}Cl₆ | 1.1 × 10⁻³ | 1.8 × 10⁻⁴ | 16 |

**Table 5**

| | Solid Electrolyte | Ionic Conductivity [S/cm] | | Retention Rate [%] |
|---|---|---|---|---|
| | | After Synthesis | 16h Exposure | (16h Exposure) /(After Synthesis) |
| Example 8 | Li_{1.75}Zr_{0.25}Ta_{0.5}Er_{0.25}Cl_{5.4}O_{0.3} | 2.6 × 10⁻³ | 1.9 × 10⁻⁴ | 7 |
| Comparative Example 6 | Li_{1.75}Zr_{0.25}Ta_{0.5}Er_{0.25}Cl₆ | 7.1 × 10⁻⁴ | 3.6 × 10⁻⁵ | 5 |

### Example 1

### Preparation of Electrolyte

In an argon atmosphere with a dew point of -60°C or lower, LiCl, ZrCl₄, TaCl₅, and Gd₂O₃ serving as raw powder were weighed in a molar ratio LiCl:ZrCl₄:TaCl₅:Gd₂O₃ of 1.7:0.5:0.4:0.05, and the raw powder of these compounds was pulverized and mixed together in a mortar. Resultant mixed powder was poured into a zirconia pot and milled at 300 rpm for 20 hours (h) by using a planetary ball mill to obtain solid electrolyte powder.

### Exposure Test

The solid electrolyte powder was poured into a petri dish and left at rest (exposed) for 16 hours in a dry room with a dew point controlled at -40°C.

### Conductivity Measurement

The solid electrolyte powder was poured into a mold made from a resinous sleeve and upper and lower stainless (SUS) punches and was uniaxially press-molded by the application of pressure at 150 MPa. Then, conductors were respectively connected to the upper and lower punches, and impedance measurement was performed at ambient temperature to calculate lithium-ion conductivity (hereinafter, also simply referred to as "ionic conductivity").

### Stability Evaluation

The ionic conductivity was calculated by an impedance measurement conducted on the solid electrolyte powder obtained immediately after milling in the planetary ball mill (after synthesis) and the solid electrolyte powder exposed for 16 hours in the dry room. In Table 1, the ionic conductivity of the solid electrolyte powder obtained immediately after milling (i.e., initial conductivity) is shown in the "After Synthesis" column, and the ionic conductivity of the solid electrolyte powder exposed for 16 hours in the dry room is shown in the "16h Exposure" column (the same applies to Tables 2 to 5). In the stability evaluation, retention rates of the ionic conductivities were calculated. The retention rate of the ionic conductivity after 16-hour exposure was obtained from (100 × (ionic conductivity after 16-hour exposure)/(ionic conductivity after synthesis)). It can be said that the higher the retention rate, the higher the stability (resistance to humidity).

### Example 2

The electrolyte was prepared, tested, and evaluated in the same manner as in Example 1 described above, except that in the production of the electrolyte according to Example 1, LiCl, Li₂O, ZrCl₄, TaCl₅, and Gd₂O₃ serving as the raw powder were weighted in a molar ratio LiCl:Li₂O:ZrCl₄:TaCl₅:Gd₂O₃ of 1.4:0.15:0.5:0.4:0.05.

### Example 3

The electrolyte was prepared, tested, and evaluated in the same manner as in Example 1 described above, except that in the production of the electrolyte according to Example 1, LiCl, Li₂O, ZrCl₄, TaCl₅, and Gd₂O₃ serving as the raw powder were weighed in a molar ratio LiCl:Li₂O:ZrCl₄:TaCl₅:Gd₂O₃ of 1.0:0.35:0.5:0.4:0.05.

### Example 4

The electrolyte was prepared, tested, and evaluated in the same manner as in Example 1 described above, except that in the production of the electrolyte according to Example 1, LiCl, Li₂O, ZrCl₄, TaCl₅, and Gd₂O₃ serving as the raw powder were weighed in a molar ratio LiCl:Li₂O:ZrCl₄:TaCl₅:Gd₂O₃ of 0.5:0.6:0.5:0.4:0.05.

### Example 5

The electrolyte was prepared, tested, and evaluated in the same manner as in Example 1 described above, except that in the production of the electrolyte according to Example 1, LiCl, ZrCl₄, TaCl₅, GdCl₃, and Gd₂O₃ serving as the raw powder were weighed in a molar ratio LiCl:ZrCl₄:TaCl₅:GdCl₃:Gd₂O₃ of 2.0:0.6:0.2:0.1:0.05.

### Example 6

The electrolyte was prepared, tested, and evaluated in the same manner as in Example 1 described above, except that in the production of the electrolyte according to Example 1, LiCl, ZrCl₄, TaCl₅, and Gd₂O₃ serving as the raw powder were weighed in a molar ratio LiCl:ZrCl₄:TaCl₅:Gd₂O₃ of 1.9:0.5:0.3:0.1.

### Example 7

The electrolyte was prepared, tested, and evaluated in the same manner as in Example 1 described above, except that in the production of the electrolyte according to Example 1, LiCl, Li₂O, ZrCl₄, TaCl₅, and YbCl₃ serving as the raw powder were weighed in a molar ratio LiCl:Li₂O:ZrCl₄:TaCl₅:YbCl₃ of 1.7:0.15:0.6:0.2:0.2.

### Example 8

The electrolyte was prepared, tested, and evaluated in the same manner as in Example 1 described above, except that in the production of the electrolyte according to Example 1, LiCl, Li₂O, ZrCl₄, TaCl₅, and ErCl₃ serving as the raw powder were weighed in a molar ratio LiCl:Li₂O:ZrCl₄:TaCl₅:ErCl₃ of 1.15:0.3:0.25:0.5:0.25.

### Comparative Example 1

The electrolyte was prepared, tested, and evaluated in the same manner as in Example 1 described above, except that in the production of the electrolyte according to Example 1, LiCl, ZrCl₄, TaCl₅, and GdCl₃ serving as the raw powder were weighed in a molar ratio LiCl:ZrCl₄:TaCl₅:GdCl₃ of 1.7:0.5:0.4:0.1.

### Comparative Example 2

The electrolyte was prepared, tested, and evaluated in the same manner as in Example 1 described above, except that in the production of the electrolyte according to Example 1, LiCl, ZrCl₄, and TiO₂ serving as the raw powder were weighed in a molar ratio LiCl:ZrCl₄:TiO₂ of 2.0:0.7:0.3.

### Comparative Example 3

The electrolyte was prepared, tested, and evaluated in the same manner as in Example 1 described above, except that in the production of the electrolyte according to Example 1, LiCl, ZrCl₄, TaCl₅, and GdCl₃ serving as the raw powder were weighed in a molar ratio LiCl:ZrCl₄:TaCl₅:GdCl₃ of 2.0:0.6:0.2:0.2.

### Comparative Example 4

The electrolyte was prepared, tested, and evaluated in the same manner as in Example 1 described above, except that in the production of the electrolyte according to Example 1, LiCl, ZrCl₄, TaCl₅, and GdCl₃ serving as the raw powder were weighed in a molar ratio LiCl:ZrCl₄:TaCl₅:GdCl₃ of 1.9:0.5:0.3:0.2.

### Comparative Example 5

The electrolyte was prepared, tested, and evaluated in the same manner as in Example 1 described above, except that in the production of the electrolyte according to Example 1, LiCl, ZrCl₄, TaCl₅, and YbCl₃ serving as the raw powder were weighed in a molar ratio LiCl:ZrCl₄:TaCl₅:YbCl₃ of 2.0:0.6:0.2:0.2.

### Comparative Example 6

The electrolyte was prepared, tested, and evaluated in the same manner as in Example 1 described above, except that in the production of the electrolyte according to Example 1, LiCl, ZrCl₄, TaCl₅, and ErCl₃ serving as the raw powder were weighed in a molar ratio LiCl:ZrCl₄:TaCl₅:ErCl₃ of 1.75:0.25:0.5:0.25.

As shown in Table 1, in each of the solid electrolytes according to Examples 1 to 4 that had the same composition ratio of Li, Zr, Ta, and Gd but had different ratios of O, the ionic conductivity after synthesis was higher than or equal to 9.3 × 10⁻⁴ S/cm, the ionic conductivity after 16-hour exposure was higher than or equal to 2.7 × 10⁻⁴ S/cm, and the retention rate of the ionic conductivity was higher than or equal to 18%. In this way, the solid electrolytes that contain O according to Examples 1 to 4 were materials achieving both high ionic conductivity and high stability. In contrast, in the solid electrolyte according to Comparative Example 1 that had the same composition ratio of Li, Z r, Ta, and Gd as in Examples 1 to 4 but did not contain O, the ionic conductivity after synthesis, the ionic conductivity after 16-hour exposure, and the retention rate of the ionic conductivity were all less than the above-described values in Examples 1 to 4. The solid electrolyte according to Comparative Example 2 contained Li, Zr, Cl, and O, but did not contain Mβ and Mγ, so that the ionic conductivity after synthesis, the ionic conductivity after 16-hour exposure, and the retention rate of the ionic conductivity were all less than the above-described values in Examples 1 to 4. Accordingly, in order to further improve ionic conductivity and stability, it can be said that it is important to contain, as cations, at least one type of trivalent element, at least one type of quadrivalent element, and at least one type of pentavalent element, in addition to Li, and to further contain O.

Tables 2 to 5 also show comparisons between the examples and the comparatives examples that had the same composition ratio of Li, Mα, Mβ, and Mγ. Each of solid electrolytes that contained O according to the examples had higher ionic conductivity after synthesis, higher ionic conductivity after 16-hour exposure, and higher retention rate of the ionic conductivity than solid electrolytes that did not contain O according to the comparative examples. In this way, it has been confirmed that, with the same cation ratio, the above-described properties changed depending on the inclusion of O, and that the solid electrolytes containing O improved the above-described properties although the extent of the improvement varied.

The reason why the solid electrolytes containing O have improved ionic conductivity after synthesis is not clear, but the introduction of O creates defects at the anion sites, causing distortion of the structure. This is considered to expand a pathway that Li ions move and to improve ionic conductivity. Moreover, O has an ionic radius of 1.40, which is smaller than the ionic radius of Cl of 1.81. Thus, it is thought that O with a shorter ionic radius has a shorter bond distance with the cations than Cl, and the bonding force of O and the cations is higher than the bonding force of Cl and the cations. Such improved bonding force is assumed to improve the stability of the material.

The mechanism for improving ionic conductivity and stability after synthesis is considered to remain the same, regardless of the cation type. Specifically, ionic conductivity and stability are also considered to be improved even if Hf serving as a tetravalent cation like Zr is used, instead of or together with Zr. The same also applies to the case where Nb serving as a pentavalent cation like Ta and having the same ionic radius as Ta is used, instead of or together with Ta. The same yet also applies to the case where Dy, Ho, Eu, and Sc serving as trivalent cations like Gd, Yb, and Er and having ionic radii approximate to those of Gd, Yb, or Er are each used, instead of or together with Gd, Yb, or Er.

As described thus far, the solid electrolyte according to the present embodiment contains Li, Mα, Mβ, Mγ, Cl, and O. Mα is at least one element selected from the group consisting of Zr and Hf. Mβ is at least one element selected from the group consisting of Ta and Nb. Mγ is at least one element selected from the group consisting of Gd, Yb, Dy, Er, Ho, Eu, and Sc.

Here, the solid electrolytes according to Comparative Examples 1 and 3 to 6 were the solid electrolyte according to the related technology described above, and their ionic conductivities after synthesis were, for example, higher than or equal to 1.0 × 10⁻⁴ S/cm at ambient temperature. The ionic conductivities would decrease if the solid electrolytes were left at rest for 16 hours in the dry room, but it has been confirmed that the ionic conductivities would be recovered to 1.0 × 10⁻⁴ S/cm or higher by heat treatment at 150°C. However, because heat treatment becomes necessary to recover the ionic conductivity, the solid electrolytes according to Comparative Examples 1 and 3 to 6 consumed large electric power during production, resulting in an increase in production cost.

In contrast, by doping oxygen atoms, the solid electrolyte according to the present embodiment achieves higher ionic conductivity after synthesis (initial conductivity) than the solid electrolytes according to Comparative Examples 1 and 3 to 6 and retains high ionic conductivity (e.g., higher than or equal to 1.0 × 10⁻⁴ S/cm) even in a dry room environment with a dew point controlled at -40°C. In this way, the solid electrolyte according to the present embodiment has little degradation in conductivity and achieves high stability, thus not requiring heat treatment for the recovery of ionic conductivity. As a result, if this solid electrolyte is adopted in an existing battery manufacturing process conducted in the dry room environment, it is possible to easily manufacture a lithium-ion battery. Note that it has been confirmed that the ionic conductivity of the solid electrolyte according to the present embodiment will also be improved by heat treatment similar to that conducted in Comparative Examples 1 and 3 to 6.

A preferable solid electrolyte is expressed by the composition formula (1) below:

Li_{6-(4+a-b)(1+c)}(Mα_{(1-a-b)}MβₐMγ_{b})_{1+c}Cl_{6-2d}O_{d} ... (1),

where 0 < a, 0 < b, a + b < 1, -0.2 ≤ c ≤ 0.2, and 0 < d < 3 are satisfied. By optimizing the amount d of oxygen in the chloride electrolyte expressed by LiₓMCl_{6-2d}O_{d} and the type and combination of the cations M, it is possible to more reliably realize the solid electrolyte with high ionic conductivity and high stability.

The solid electrolyte and the all-solid-state secondary battery 1 described above may be modified in various ways.

The solid electrolyte containing Li, Mα, Mβ, Mγ, Cl, and O may not satisfy the composition formula (1) above.

The solid electrolyte may be mixed with a different substance (may contain Li) and used as an electrolyte material. In this case, it is preferable that the solid electrolyte is the component with a highest mass ratio, i.e., the main component, among all components contained in the electrolyte material. The mass ratio of the main component in the electrolyte material is preferably higher than or equal to 50% by mass, more preferably higher than or equal to 60% by mass, and yet more preferably higher than or equal to 70% by mass.

The solid electrolyte used in the all-solid-state secondary battery 1 does not necessarily have to be included in all of the positive electrode 11, the negative electrode 12, and the electrolyte layer 13, and may be included in at least one of the positive electrode 11, the negative electrode 12, and the electrolyte layer 13. The solid electrolyte may also be used in any battery other than the all-solid-state secondary battery, and may be used in applications other than batteries.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

### REFERENCE SIGNS LIST

- 1: all-solid-state lithium-ion secondary battery
- 11: positive electrode
- 12: negative electrode
- 13: electrolyte layer

## Claims

1. A solid electrolyte comprising:
Li, Mα, Mβ, Mγ, Cl, and O,
wherein Mα is at least one element selected from a group consisting of Zr and Hf,
Mβ is at least one element selected from a group consisting of Ta and Nb, and
Mγ is at least one element selected from a group consisting of Gd, Yb, Dy, Er, Ho, Eu, and Sc.

2. The solid electrolyte according to claim 1, wherein
Mα includes Zr.

3. The solid electrolyte according to claim 1, wherein
Mβ includes Ta.

4. The solid electrolyte according to claim 1, wherein
Mγ includes Gd, Yb, or Er.

5. The solid electrolyte according to claim 1,
the solid electrolyte being expressed by a composition formula (1) below:
Li_{6-(4+a-b)(1+c)}(Mα_{(1-a-b)}MβₐMγ_{b})_{1+c}Cl_{6-2d}O_{d} ... (1),
where 0 < a, 0 < b, a + b < 1, -0.2 ≤ c ≤ 0.2, and 0 < d < 3 are satisfied.

6. A lithium-ion battery comprising:
the solid electrolyte according to any one of claims 1 to 5.
